Europäisches Patentamt

European Patent Office

Office européen des brevets

(19)

(11) Numéro de publication : **0 181 827**
**B1**

(12) **FASCICULE DE BREVET EUROPÉEN**

(45) Date de publication du fascicule du brevet :
09.11.88

(51) Int. Cl.⁴ : **C 22 B 60/02**, C 01 G 43/00

(21) Numéro de dépôt : 85420204.1

(22) Date de dépôt : 14.11.85

(54) Procédé de récupération sous forme de fluorure tétravalent de l'uranium extrait de solutions phosphatées.

(30) Priorité : 16.11.84 FR 8417993

(43) Date de publication de la demande :
21.05.86 Bulletin 86/21

(45) Mention de la délivrance du brevet :
09.11.88 Bulletin 88/45

(84) Etats contractants désignés :
BE NL SE

(56) Documents cités :
EP-A- 0 073 524
US-A- 2 841 467
US-A- 2 866 680
US-A- 2 873 166

(73) Titulaire : URANIUM PECHINEY
Tour Manhattan, La Défense 2, 6, place de l'Iris,
F-92400 Courbevoie (FR)

(72) Inventeur : Fioreancig, Antoine
Chemin du Clos Chipier
F-69230 Saint-Genis-Laval (FR)

(74) Mandataire : Vanlaer, Marcel et al
PECHINEY 28, rue de Bonnel
F-69433 Lyon Cédex 3 (FR)

**0 181 827**

## Description

La présente invention concerne un procédé de récupération de l'uranium qui a été extrait d'une solution aqueuse phosphatée au moyen d'un solvant organique et que l'on réextrait dudit solvant sous forme de fluorure tétravalent au moyen d'acide fluorhydrique.

Les solutions phosphatées et notamment l'acide phosphorique obtenus par attaque sulfurique de minerais phosphatés contiennent, selon l'origine du minerai, une quantité d'uranium comprise généralement entre 0,040 et 0,200 g/l.

En raison du grand intérêt présenté par l'uranium dans l'industrie nucléaire, de nombreux procédés ont été mis au point pour récupérer ce métal à partir de ces solutions.

Certains de ces procédés consistent à extraire l'uranium sous forme hexavalente au moyen de solvants organophosphorés tels que les mélanges d'acide di-2-éthylhexylphosphorique et d'oxyde de trioctylphosphine, mélange communément appelé Di-2-EHPA + TOPO tel que celui décrit, par exemple, dans le brevet US 3 711 951.

D'autres procédés recourent à l'extraction de l'uranium sous la forme tétravalente au moyen d'autres solvants organophosphorés comme, par exemple, les mélanges d'acide mono et dioctylphénylphosphorique dans le procédé dit O.P.A.P. ou les acides alkylpyrophosphoriques comme l'acide octylpyrophosphorique dans le procédé dit O.P.P.A.

De tels procédés sont évoqués dans les brevets US 3 835 214 et belge 870 346 en ce qui concerne l'O.P.A.P. et l'US 2 866 680 pour l'O.P.P.A.

Dans le cas des procédés où l'uranium est extrait sous la forme tétravalente, on met généralement en contact le solvant organophosphoré chargé en uranium avec une solution aqueuse d'acide fluorhydrique de façon à extraire cet uranium par formation d'une suspension d'$UF_4$, composé qui peut être récupéré de la solution aqueuse après séparation du solvant. Ainsi, le brevet US 2.873.166 (Bowen) signale que pour avoir un taux de réextraction convenable, il faut de préférence utiliser une solution ayant une concentration en HF de 15 à 25 % en poids.

Cependant, les solvants organophosphorés se dégradent en présence de telles solutions et cette dégradation est d'autant plus importante que la concentration en HF est élevée et que la durée de contact avec le solvant est longue.

Dans un procédé d'extraction en continu de l'uranium, il est donc nécessaire de fournir un appoint de solvant pour compenser la perte occasionnée par cette dégradation. C'est ainsi que dans le cas du procédé O.P.P.A., il est courant d'ajouter en continu au moins 10 g d'acide octylpyrophosphorique par litre de solvant entrant dans la batterie d'extraction.

Pour diminuer cette dégradation Bowen utilise une solution aqueuse de réextraction contenant un mélange d'acide sulfurique et d'acide fluorhydrique qui permet une séparation plus rapide des phases et donc un temps de contact plus court entre la phase organique et la solution de réextraction (col. 3 1.24-30).

La demanderesse consciente également des frais occasionnés par cette addition permanente de solvant a mis au point, un procédé de récupération dans lequel on réduit de même la durée de contact de l'acide fluorhydrique avec le solvant, mais de plus on diminue la concentration de l'acide fluorhydrique utilisé, de manière à limiter la dégradation du solvant sans nuire pour autant au rendement de réextraction de l'uranium, et on facilite la récupération de l'$UF_4$ de la phase aqueuse obtenue après séparation de la phase organique.

Selon l'invention, le procédé de récupération de l'uranium contenu dans des solutions phosphatées comporte les étapes suivantes :

a) réduction de l'uranium contenu dans la solution à l'état tétravalent,

b) extraction dudit uranium de la solution au moyen d'un solvant organique appartenant au groupe constitué par les mélanges d'acide mono et dialkylphénylphosphoriques et les acides alkylpyrophosphoriques dilué dans un hydrocarbure,

c) réextraction de l'uranium du solvant au moyen d'une solution aqueuse d'acide fluorhydrique,

d) séparation du solvant désuranié de l'émulsion formée en c) et recyclage dudit solvant à l'extraction avec un appoint de solvant pur,

e) récupération de l'$UF_4$ de la suspension aqueuse obtenue en d).

Ce procédé est caractérisé en ce que l'on introduit des particules de $UF_4$ dans la solution de réextraction utilisée en c) de manière à former une suspension.

L'invention se distingue donc des procédés connus en ce que la solution d'acide fluorhydrique utilisée à la réextraction de l'uranium n'est pas pure mais contient des particules d'$UF_4$.

Cette façon d'opérer résulte de l'observation surprenante faite par la demanderesse suivant laquelle la présence de particules d'$UF_4$ dans la solution de réextraction permettait d'utiliser de l'acide fluorhydrique moins concentré et de réduire la durée de contact avec le solvant sans nuire au rendement de réextraction de l'uranium.

La demanderesse a également observé que ces particules avaient pour effet de faire grossir les grains d'$UF_4$ qui précipitent lors de l'ajout d'acide fluorhydrique entraînant ainsi une récupération plus aisée de l'$UF_4$ de la suspension aqueuse obtenue après séparation du solvant.

2

Poursuivant ses recherches, la demanderesse a constaté que la solution d'acide fluorhydrique contenant de l'UF$_4$ pouvait être constituée par ladite suspension aqueuse obtenue après séparation du solvant à condition d'ajuster au préalable sa concentration en HF.

Elle a ainsi conçu un système dans lequel la suspension aqueuse obtenue après séparation du solvant est soumise pour une fraction à une opération soit de filtration soit de centrifugation pour en récupérer l'UF$_4$ tandis que l'autre fraction est recyclée à l'étape de réextraction après qu'on ait fait un appoint d'acide fluorhydrique.

Le recyclage de cette fraction est avantageusement assuré de manière à maintenir une quantité d'UF$_4$ en suspension comprise entre 5 et 300 g/l et de préférence entre 20 et 200 g/l car une concentration trop faible n'apporte qu'un résultat partiel tandis qu'une concentration trop élevée freine le grossissement des grains d'UF$_4$.

En ce qui concerne la concentration en HF de la fraction recyclée, elle est ajustée à une valeur de préférence comprise entre 9 et 12 % en poids par injection dans le circuit de recyclage d'une solution d'HF concentré à 70 % en poids par exemple.

Quant aux autres étapes du procédé, elles sont réalisées de la manière suivante :

Avant extraction de l'uranium, la solution phosphatée, résultant de l'attaque du minerai, est soumise à l'action d'un réducteur tel que le fer, par exemple, dont la fonction est d'amener l'uranium à la valence 4. On utilise soit du fer en poudre qui est mis en contact avec la solution dans un réacteur agité, soit des plaquettes (tôles par exemple) disposées dans une colonne à l'intérieur de laquelle on fait circuler la solution.

Le solvant organique mis en œuvre pour extraire l'uranium de la solution phosphatée est soit un mélange d'acides mono et dialkylphénylphosphoriques tel que, de préférence, le mélange d'acides mono et dioctylphénylphosphorique, soit les acides alkylpyrophosphoriques tels que de préférence, l'acide décylpyrophosphorique ou l'acide octylpyrophosphorique.

Ces acides alkylphosphoriques sont ceux qui présentent le meilleur pouvoir solvant vis-à-vis de l'uranium tétravalent et ils sont employés à l'état dilué dans un hydrocarbure aliphatique et/ou aromatique.

Le solvant qui s'est chargé en uranium lors de l'extraction est mis en contact avec la solution d'acide fluorhydrique de réextraction pour former une émulsion que l'on sépare d'une part, en un solvant désuranié qui est recyclé à l'étape d'extraction après introduction d'un appoint de solvant frais correspondant à la quantité qui a été dégradé par ledit acide et d'autre part, une suspension aqueuse d'UF$_4$ dans l'acide fluorhydrique résiduel ou « eaux mères ».

Cette réextraction peut se faire à la même température que celle de l'extraction, c'est-à-dire entre 30 et 60 °C, cependant il est avantageux pour minimiser les pertes en solvant par dégradation d'opérer entre 10 et 30 °C. La récupération de l'UF$_4$ de la suspension issue de la réextraction s'effectue soit par centrifugation, soit par décantation.

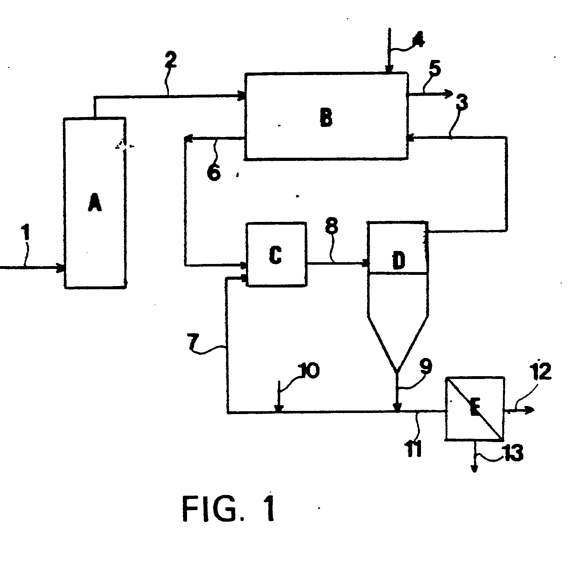

L'invention sera mieux comprise à l'aide du schéma de principe représenté dans la figure jointe.

La solution phosphatée uraniée (1) provenant de l'attaque du minerai par l'acide sulfurique est introduite dans la colonne de réduction (A) garnie de plaquettes de fer pour donner une solution (2) dite « réduite » dans laquelle l'uranium est à l'état tétravalent. Cette solution est traitée à contre-courant dans une batterie d'extraction (B) par un courant de solvant organique (3) recyclé et d'un appoint de solvant frais (4) pour donner une solution phosphatée désuraniée (5) et un courant de solvant (6) chargé en uranium.

La batterie d'extraction (B) peut être une batterie de mélangeurs décanteurs, une colonne d'extraction pulsée ou agitée, une batterie d'extracteurs centrifuges ou encore un extracteur centrifuge multiétages.

Le solvant (6) est envoyé dans la batterie de réextraction (C) qui est alimentée par ailleurs avec un courant (7) d'une solution aqueuse d'acide fluorhydrique contenant de l'UF$_4$ en suspension.

De (C) sort une émulsion (8) qui est envoyée dans un décanteur (D) débitant d'une part, le solvant désuranié (3) qui est recyclé vers (B), d'autre part, la suspension aqueuse (9) d'UF$_4$ dans l'acide fluorhydrique qui est recyclée pour une fraction en (7) vers (B) après remise à la concentration en HF au moyen d'un appoint (10) d'HF concentré tandis que l'autre fraction (11) est filtrée ou centrifugée en (E) afin d'en récupérer l'UF$_4$ (13) et les eaux mères (12) qui sont éventuellement recyclées en (C).

L'invention est illustrée à l'aide des exemples d'application suivants :

## Exemple 1

Une solution technique d'acide phosphorique contenant 27,5 % de P$_2$O$_5$ et 0,008 % d'uranium à l'état tétravalent a été soumise à l'étape d'extraction au moyen d'un solvant constitué par du kérosène R de Shell dans lequel était dissous 30 g/l d'acide octylpyrophosphorique (O.P.P.A.). On a ainsi obtenu un extrait contenant 0,9 g/l d'uranium que l'on a partagé en trois fractions et qui ont été traitées séparément par une solution d'acide fluorhydrique à 15 % en poids dans les conditions suivantes :

— suivant l'art antérieur pour la première, à savoir : HF pur dans un rapport de volume de 0,1 par rapport au solvant,

— avec HF pur et un rapport de volume de 1,2 pour la deuxième,

3

**0 181 827**

— avec le même rapport pour la troisième mais en ajoutant des particules d'UF$_4$ suivant l'invention.

Pour chacune de ces fractions, on a mesuré les quantités d'uranium restant dans le solvant après différentes durées de réextraction.

Les conditions des essais et les résultats sont rassemblés dans le tableau I.

Tableau I

| Essai n° | Volume de solvant chargé en U mis en oeuvre en ml | Solution HF | | | U dans le solvant en g/l | | |
|---|---|---|---|---|---|---|---|
| | | Concen-tration % | Volume ml | Quantité UF$_4$ g/l | Durée de réextraction en minutes | | |
| | | | | | 0 | 1 | 5 |
| 1 | 500 | 15 | 50 | 0 | 0,900 | 0,250 | 0,055 |
| 2 | 500 | 15 | 600 | 0 | 0,900 | 0,155 | 0,035 |
| 3 | 500 | 15 | 600 | 150 | 0,900 | 0,045 | 0,033 |

Ce tableau montre l'influence de la présence d'UF$_4$ sur la vitesse de réextraction de l'uranium à savoir qu'au bout d'une minute de réextraction, la quantité d'uranium restant dans le solvant est environ 3 fois plus faible quand on opère suivant l'invention. De ce fait, pour une quantité donnée d'uranium à extraire, la durée de contact du solvant avec l'HF est moins longue d'où une dégradation du solvant plus faible.

Exemple 2

Dans cet exemple, on a mis en œuvre le même solvant que dans l'exemple 1, mais chargé à 1,100 g/l d'uranium et on l'a partagé en plusieurs fractions que l'on a soumis à la réextraction dans des conditions variables de concentration en HF et en présence ou non d'UF$_4$ et on a mesuré la quantité d'uranium restant dans le solvant après différentes durées de réextraction.

Les conditions des essais et les résultats figurent dans le tableau 2 ci-après :

Tableau 2

| Solution de réextraction | | U dans le solvant en g/l | | | |
|---|---|---|---|---|---|
| Concentration HF en % en poids | Quantité UF$_4$ en g/l | Durée de réextraction en minutes | | | |
| | | 0 | 0,5 | 5 | 10 |
| 9 | 0 | 1,100 | 0,350 | 0,290 | 0,230 |
| | 50 | 1,100 | 0,175 | 0,140 | 0,130 |
| | 150 | 1,100 | 0,140 | 0,120 | 0,110 |
| 12 | 0 | 1,100 | 0,260 | 0,165 | |
| | 50 | 1,100 | 0,120 | 0,080 | |
| | 150 | 1,100 | 0,080 | 0,050 | |
| 15 | 0 | 1,100 | 0,200 | 0,080 | |
| | 50 | 1,100 | 0,080 | 0,055 | |
| | 150 | 1,100 | 0,060 | 0,045 | |

Ces essais montrent que l'addition d'UF$_4$ permet d'abaisser la concentration en HF de la solution de réextraction, ce qui conduit à une réduction de la dégradation du solvant organique sans nuire au rendement de réextraction de l'uranium.

4

### Exemple 3

Dans cet exemple, le solvant, qui est un mélange d'acides mono et dioctylphénylphosphoriques dilué dans du kérosène R de Shell, est chargé à 0,8 g/l d'uranium tétravalent. Une fraction a été traitée suivant l'art antérieur et l'autre suivant l'invention en utilisant une solution de HF contenant de l'$UF_4$ en suspension correspondant au courant (9) d'une opération précédente auquel a été ajouté un complément d'HF concentré.

Les conditions des essais et les résultats figurent dans le tableau 3 ci-après :

### Tableau 3

| Solution de réextraction | | U dans le solvant en g/1 | | | |
|---|---|---|---|---|---|
| Concentration HF en % en poids | Quantité $UF_4$ en g/1 | Durée de réextraction en minutes | | | |
| | | 0 | 0,5 | 5 | 10 |
| 15 | 0 | 0,800 | 0,300 | 0,100 | 0,070 |
| 15 | 50 | 0,800 | 0,100 | 0,070 | 0,050 |

Ce tableau montre que par recyclage d'une partie de la suspension d'$UF_4$ issue de l'étape de réextraction, on diminue sensiblement la durée de contact de l'acide fluorhydrique avec le solvant organique.

### Exemple 4

(Les références indiquées correspondent à celles de la figure).
Une solution phosphatée (1) ayant la composition suivante en % en poids :

| | |
|---|---|
| $P_2O_5$ | 27,5 |
| $SO_4$ | 2 |
| F | 1,2 |
| Ca | 0,4 |
| U | 0,081 (soit 0,105 g/l) |

a été envoyée à raison de 300 l/h à travers une colonne (A) garnie de plaquettes de fer. Après filtration des impuretés insolubles, la solution (2) dite « réduite » a été mise en contact à contre-courant dans une batterie de mélangeurs décanteurs (B) avec un courant de 20 l/h de solvant de composition analogue à celle de l'exemple 1, en provenance du décanteur (D) et contenant encore 0,05 g/l d'uranium et un appoint (4) de 0,3 l/h de solvant pur contenant 500 g/l d'O.P.P.A., soit une consommation de 150 g/h d'O.P.P.A.

L'acide phosphorique désuranié (5) sortant de (B) ne contenait plus que 0,006 g/l d'uranium soit un rendement d'extraction de 94,3 %.

A la sortie de (B), le solvant (6) chargé de 1,55 g/l d'uranium était traité en (C) par 40 l/h d'une solution (7) recyclée d'HF à 12 % en poids contenant 150 g/l d'$UF_4$ en provenance de (D) et après appoint (10) d'HF à 70 % en poids. L'émulsion (8) sortant de (C) était séparée en (D) en un courant de solvant organique (3) recyclé à l'extraction et une suspension d'$UF_4$ dans HF (9) dont une partie était recyclée vers (C) et l'autre (11) était soumise à une opération de filtration pour séparer l'$UF_4$ des eaux mères.

On a ainsi récupéré 1 200 g/h d'un produit à 37 % d'humidité et 25 % d'uranium.

Ceci est à comparer à un essai effectué suivant l'art antérieur avec les mêmes réactifs, le même minerai et les mêmes débits, dans lequel on a constaté que d'une part il fallait utiliser une solution d'HF à 15 % et un appoint de solvant de 300 g/h pour avoir un rendement d'extraction identique et que d'autre part la suspension (9) était infiltrable, il fallait recourir à la centrifugation pour obtenir finalement un produit qui contenait encore 55 % d'humidité.

On peut ainsi juger de l'intérêt présenté par le procédé de l'invention qui peut s'appliquer à tous les problèmes de récupération de l'uranium sous forme d'$UF_4$ à partir de solutions phosphatées lorsqu'on veut diminuer la durée de contact de l'acide fluorhydrique avec le solvant et réduire ainsi la consommation dudit solvant sans nuire au rendement de réextraction de l'uranium et tout en améliorant la qualité du produit obtenu.

## Revendications

1. Procédé de récupération sous forme d'UF₄ de l'uranium contenu dans des solutions phosphatées comportant les étapes suivantes :

a) réduction de l'uranium contenu dans la solution à l'état tétravalent,

b) extraction dudit uranium de la solution au moyen d'un solvant organique appartenant au groupe constitué par les mélanges d'acide mono et dialkylphénylphosphoriques et les acides alkylpyrophosphoriques dilués dans un hydrocarbure,

c) réextraction de l'uranium du solvant au moyen d'une solution aqueuse d'acide fluorhydrique,

d) séparation du solvant désuranié de l'émulsion formée en c) et recyclage dudit solvant à l'extraction avec un appoint de solvant pur,

e) récupération de l'UF₄ de la suspension aqueuse obtenue en d), caractérisé en ce que l'on introduit des particules de UF₄ dans la solution de réextraction utilisée en c) de manière à former une suspension.

2. Procédé selon la revendication 1, caractérisé en ce que la solution de réextraction provient du recyclage d'une fraction au moins de la suspension obtenue en d) à laquelle on a fait un appoint d'acide fluorhydrique.

3. Procédé selon la revendication 1, caractérisé en ce que la concentration en UF₄ de la suspension est comprise entre 5 et 300 g/l.

4. Procédé selon la revendication 3, caractérisé en ce que la concentration en UF₄ de la suspension est de préférence comprise entre 20 et 200 g/l.

5. Procédé selon la revendication 1, caractérisé en ce que la concentration en acide fluorhydrique de la solution de traitement du solvant organique est comprise entre 9 et 12 % en poids.

6. Procédé selon la revendication 1, caractérisé en ce que la réextraction de l'uranium s'effectue à une température comprise entre 10 et 30 °C.

7. Procédé selon la revendication 1, caractérisé en ce que le solvant organique d'extraction est un mélange d'acides mono et dioctylphénylphosphoriques.

8. Procédé selon la revendication 1, caractérisé en ce que le solvant organique d'extraction est un acide appartenant au groupe constitué par les acides décyl- et octylpyrophosphoriques.

## Claims

1. A process for the recovery in the form of UF₄ of uranium contained in phosphate-bearing solutions, comprising the following steps :

a) reduction of the uranium contained in the solution to the tetravalent state,

b) extraction of said uranium from the solution by means of an organic solvent belonging to the group formed by mixtures of mono and dialkylphenylphosphoric acids and alkylpyrophosphoric acids, which are diluted in a hydrocarbon,

c) re-extraction of the uranium from the solvent by means of an aqueous solution of hydrofluoric acid,

d) separation of the solvent from which uranium has been removed from the emulsion formed in step c) and recycling of said solvent to the extraction step with a make-up amount of pure solvent, and

e) recovery of UF₄ from the aqueous suspension produced in step d), characterised in that particles of UF₄ are introduced into the re-extraction solution used in step c) so as to obtain a suspension.

2. A process according to claim 1 characterised in that the re-extraction solution comes from recycling of a fraction at least of the suspension obtained in step d), to which a make-up of hydrofluoric acid is added.

3. A process according to claim 1 characterised in that the concentration of UF₄ in the suspension is between 5 and 300 g/l.

4. A process according to claim 3 characterised in that the concentration of UF₄ in the suspension is preferably between 20 and 200 g/l.

5. A process according to claim 1 characterised in that the concentration of hydrofluoric acid in the solution for treatment of the organic solvent is between 9 and 12 % by weight.

6. A process according to claim 1 characterised in that re-extraction of the uranium is carried out at a temperature of between 10 and 30 °C.

7. A process according to claim 1 characterised in that the organic extraction solvent is a mixture of mono and dioctylphenylphosphoric acids.

8. A process according to claim 1 characterised in that the organic extraction solvent is an acid belonging to the group formed by decyl- and octylpyrophosphoric acids.

## Patentansprüche

1. Verfahren zur Gewinnung von in Phosphatlösungen enthaltenem Uran in Form von UF₄, das die folgenden Schritte aufweist :

a) Reduktion des in der Lösung enthaltenen Urans zum vierwertigen Zustand,

b) Extraktion dieses Urans aus der Lösung mithilfe eines organischen Lösungsmittels, das zur Gruppe gehört, die von den Mono- und Dialkylphenylphosphorsäuregemischen und den in einem Kohlenwasserstoff gelösten Alkylpyrophosphorsäuren gebildet wird,

c) Reextraktion des Urans aus dem Lösungsmittel mithilfe einer wässerigen Fluorwasserstoffsäurelösung,

d) Trennung des enturanierten Lösungsmittels von der in c) gebildeten Emulsion und Rückführung dieses Lösungsmittels zur Extraktion mit einer Ergänzung reinen Lösungsmittels,

e) Gewinnung des $UF_4$ aus der in d) erhaltenen wässerigen Suspension, dadurch gekennzeichnet, daß man $UF_4$-Teilchen in die in c) verwendete Reexktraktionslösung derart einführt, um eine Suspension zu bilden.

2. Verfahren nach dem Anspruch 1, dadurch gekennzeichnet, daß die Reextraktionslösung von der Rückführung wenigstens eines Teils der in d) erhaltenen Suspension stammt, der man eine Ergänzung an Fluorwasserstoffsäure zusetzt.

3. Verfahren nach dem Anspruch 1, dadurch gekennzeichnet, daß die Konzentration der Suspension an $UF_4$ im Bereich von 5 bis 300 g/l ist.

4. Verfahren nach dem Anspruch 3, dadurch gekennzeichnet, daß die Konzentration der Suspension an $UF_4$ vorzugsweise im Bereich von 20 bis 200 g/l ist.

5. Verfahren nach dem Anspruch 1, dadurch gekennzeichnet, daß die Fluorwasserstoffsäure-Konzentration der Lösung zur Behandlung des organischen Lösungsmittels im Bereich von 9 bis 12 Gew.% ist.

6. Verfahren nach dem Anspruch 1, dadurch gekennzeichnet, daß die Reexktraktion des Urans bei einer Temperatur im Bereich von 10 bis 30 °C erfolgt.

7. Verfahren nach dem Anspruch 1, dadurch gekennzeichnet, daß das organische Extraktionslösungsmittel eine Mischung von Mono- und Dioctyl-phenylphosphorsäuren ist.

8. Verfahren nach dem Anspruch 1, dadurch gekennzeichnet, daß das organische Extraktionslösungsmittel eine Säure ist, die zur Gruppe gehört, die von den Decyl- und Octylpyrophosphorsäuren gebildet wird.

FIG. 1